# EUROPÄISCHE PATENTANMELDUNG

(11) **EP 3 653 091 A1**
(43) Veröffentlichungstag der Anmeldung: **20.05.2020**
(21) Anmeldenummer: 19208872.2
(22) Anmeldetag: 13.11.2019
(51) Int. Cl.: A47J 36/32, A47J 43/046

(54) **SYSTEM UND VERFAHREN ZUM ZUBEREITEN VON LEBENSMITTELN**

(30) Priorität: 15.11.2018 DE 102018128688
(71) Anmelder: Vorwerk & Co. Interholding GmbH, 42275 Wuppertal (DE)
(72) Erfinder: Büttner, Christian, 70174 Stuttgart (DE); Koetz, Hendrik, 58300 Wetter (DE); Caballero, Marcelo, 8820 Wädenswil (CH); Rest, Stefan, 8832 Wollerau (CH); Sickert, Michael, 58256 Ennepetal (DE)
(74) Vertreter: Cohausz & Florack

(57) **Zusammenfassung**

Um das Zubereiten von Lebensmitteln zu verbessern und zuverlässiger zu gestalten schlägt die vorliegende Erfindung ein System zum Zubereiten von Lebensmitteln, mit einem ersten Küchengerät (4, 102), mit einem zweiten Küchengerät (6, 104) und mit einer Steuereinheit (8, 106), wobei das erste Küchengerät (4, 102) mindestens ein Erfassungsmittel (20, 22, 116) zum Erfassen mindestens einer Information über eine Eigenschaft eines Lebensmittels (24, 138) aufweist, wobei die Steuereinheit (8, 106) über eine erste Kommunikationsverbindung (42, 126) mit dem ersten Küchengerät (4, 102) verbunden ist und wobei die Steuereinheit (8, 106) über eine zweite Kommunikationsverbindung (44, 125) mit dem zweiten Küchengerät (6, 104) verbunden ist, vor, das dadurch gekennzeichnet ist, dass die Steuereinheit (8, 106) dazu eingerichtet ist, mindestens eine Zubereitungsvorschrift in Abhängigkeit der mindestens einen erfassten Information auszuwählen, und dass das zweite Küchengerät (6, 104) dazu eingerichtet ist, ein Zubereitungsvorgang entsprechend der mindestens einen ausgewählten Zubereitungsvorschrift durchzuführen. Weiterhin gibt die vorliegende Erfindung ein entsprechendes Verfahren vor.

## Beschreibung

Die vorliegende Erfindung betrifft ein System zum Zubereiten von Lebensmitteln, mit einem ersten Küchengerät, mit einem zweiten Küchengerät und mit einer Steuereinheit, wobei das erste Küchengerät mindestens ein Erfassungsmittel zum Erfassen mindestens einer Information über eine Eigenschaft eines Lebensmittels aufweist, wobei die Steuereinheit über eine erste Kommunikationsverbindung mit dem ersten Küchengerät verbunden ist und wobei die Steuereinheit über eine zweite Kommunikationsverbindung mit dem zweiten Küchengerät verbunden ist. Weiterhin betrifft die vorliegende Erfindung ein Verfahren zum Zubereiten von Lebensmitteln.

Zurzeit sind Datenbanken für Kochrezepte bekannt, die zum Beispiel über das Internet zugänglich sind. Dabei weisen üblicherweise die in der Datenbank gespeicherten Rezepte fest definierte Zubereitungsanweisungen und Zutatenmengen bzw. -arten auf, anhand deren ein gelungenes Zubereitungsergebnis erreicht werden soll.

Um ein passendes Kochrezept zu finden ist es weiterhin bekannt, zum Beispiel eine Personenzahl oder eine Art von Lebensmitteln als Suchkriterien einzugeben. Das Ergebnis einer solchen Suche erweist sich oft als ungenau, insbesondere in Bezug auf Eigenschaften von Lebensmitteln, die für das ausgesuchte Kochrezept eingesetzt werden sollen. Weiterhin kann es vorkommen, dass ein Nutzer mit besonderen Eigenschaften von Lebensmitteln nicht vertraut ist, so dass bereits bei der Eingabe von Suchkriterien Fehler auftreten können.

Des Weiteren weisen gleichartige Lebensmittel aus natürlichen Gründen unterschiedliche Eigenschaften auf. Als konkretes Beispiel kann für zwei Äpfel nicht davon ausgegangen werden, dass die Äpfel exakt gleich sind. Dadurch entsteht die Schwierigkeit, eine standardisierte Zubereitungsvorschrift, beispielsweise in Form eines Kochrezepts, einzuhalten.

Der vorliegenden Erfindung liegt demnach die Aufgabe zugrunde, das Zubereiten von Lebensmitteln zu verbessern und zuverlässiger zu gestalten.

Gemäß einer ersten Lehre wird diese Aufgabe erfindungsgemäß durch ein System zum Zubereiten von Lebensmitteln, mit einem ersten Küchengerät, mit einem zweiten Küchengerät und mit einer Steuereinheit, wobei das erste Küchengerät mindestens ein Erfassungsmittel zum Erfassen mindestens einer Information über eine Eigenschaft eines Lebensmittels aufweist, wobei die Steuereinheit über eine erste Kommunikationsverbindung mit dem ersten Küchengerät verbunden ist und wobei die Steuereinheit über eine zweite Kommunikationsverbindung mit dem zweiten Küchengerät verbunden ist, gelöst, das dadurch gekennzeichnet ist, dass die Steuereinheit dazu eingerichtet ist, mindestens eine Zubereitungsvorschrift in Abhängigkeit der mindestens einen erfassten Information auszuwählen, und dass das zweite Küchengerät dazu eingerichtet ist, einen Zubereitungsvorgang entsprechend der mindestens einen ausgewählten Zubereitungsvorschrift durchzuführen.

Dadurch kann das Vorhandensein eines Lebensmittels erkannt und automatisch als Suchkriterium bei der Auswahl einer Zubereitungsvorschrift berücksichtigt werden, so dass ein Auswählen einer Zubereitungsvorschrift vereinfacht wird.

Darüber hinaus können dadurch tatsächliche Eigenschaften von vorhandenen Lebensmitteln erfasst werden und bei der Auswahl einer Zubereitungsvorschrift berücksichtigt werden. Somit wird einerseits die Wahrscheinlichkeit erhöht, ein gelungenes Zubereitungsergebnis zu erreichen und andererseits der Zeitaufwand beim Suchen einer passenden Zubereitungsvorschrift verringert.

Dadurch kann weiterhin einem Nutzer eine Auswahl an passenden Zubereitungsvorschriften für vorhandene Lebensmittel angezeigt werden, so dass dieser eine Zubereitungsvorschrift wählen kann, und gegebenenfalls einen Zubereitungsvorgang entsprechend der ausgewählten Zubereitungsvorschrift durch das zweite Küchengerät durchgeführt werden.

Gemäß einer zweiten Lehre der vorliegenden Erfindung wird die oben genannte Aufgabe auch durch ein entsprechendes Verfahren zum Zubereiten von Lebensmitteln gelöst, bei dem mindestens eine Information über eine Eigenschaften eines Lebensmittels durch ein erstes Küchengerät erfasst wird, bei dem eine Zubereitungsvorschrift in Abhängigkeit der mindestens einen erfassten Information ausgewählt wird, und bei dem ein Zubereitungsvorgang durch das zweite Küchengerät entsprechend der mindestens einen ausgewählten Zubereitungsvorschrift ausgeführt wird.

Das Verfahren entspricht einem Steuern eines Systems gemäß der ersten Lehre, so dass durch das Verfahren die gleichen Vorteile wie für das System erreicht werden.

Unter dem Begriff Zubereiten von Lebensmitteln wird ein beabsichtigtes Ändern des Zustands eines Lebensmittels und alle hierzu notwendige Aktionen verstanden, wie zum Beispiel Heizen, Garen, Dampfgaren, Schneiden, Zerkleinern, Mischen, Rühren sowie Wiegen, Volumenmessen, Erkennen eines Bräunungsgrads oder einer Knusprigkeit und Weiteres.

Unter dem Begriff Küchengerät werden Geräte verstanden, die dazu eingerichtet sind, den Zustand eines Lebensmittels zu ändern. Dazu zählen zum Beispiel Geräte, durch die der Zustand eines Lebensmittel von einem rohen Zustand zu einem für ein Verzehr fertigem Zustand geändert wird, wie zum Beispiel beim Garen oder Backen.

Das erste Küchengerät und das zweite Küchengerät können weitere Elemente aufweisen, die direkt oder indirekt zum Verändern des Zustands eines Lebensmittels beitragen, wie zum Beispiel eine Feuchtigkeitseinrichtung zum Zuführen von Wasserdampf. Dadurch kann die Konsistenz eines Lebensmittels geändert werden, wie zum Beispiel beim Zubereiten eines Brotteigs.

Unter dem Begriff Küchengerät werden insbesondere Geräte verstanden, die zum privaten Einsatz im Rahmen eines Haushalts vorgesehen sind.

Vorzugsweise wird als erstes Küchengerät ein Backofen oder ein Mikrowellenofen mit einem Heizelement eingesetzt. Das zweite Küchengerät ist vorzugsweise als Kochmixer mit einer Zerkleinerungs- oder Mischungseinrichtung ausgebildet, die zum Zerkleinern bzw. zum Vermischen von Lebensmitteln eingerichtet ist. Das erste Küchengerät und das zweite Küchengerät weisen vorzugsweise jeweils ein Gehäuse, ein Steuerungsmodul und eine Energieversorgungseinheit auf.

Das System weist eine Steuereinheit auf. Vorzugsweise weist die Steuereinheit einen Datenspeicher, einen Mikroprozessor und ein Kommunikationsmodul auf, wobei Computeralgorithmen, die auf dem Datenspeicher gespeichert sind, durch den Mikroprozessor ausgeführt werden können. Aus einem solchen Ausführen resultierende Kommandos können dann durch das Kommunikationsmodul an weiteren Vorrichtungen übermittelt werden, wie zum Beispiel an das erste Küchengerät oder an das zweite Küchengerät.

Die Steuereinheit ist über eine erste Kommunikationsverbindung mit dem ersten Küchengerät und über eine zweite Kommunikationsverbindung mit dem zweiten Küchengerät verbunden. Dabei können die erste Kommunikationsverbindung und die zweite Kommunikationsverbindung jeweils eine Kabelverbindung oder eine drahtlose Verbindung sein. Eine drahtlose Verbindung kann zum Beispiel auf einem üblich angewendeten Protokoll wie Bluetooth, Infrarot oder WLAN (wireless local area network) basieren. Ein hierfür eventuell erforderliches Umwandeln von Signalen kann durch die Steuereinheit erfolgen.

Weiterhin können vorzugsweise jeweils über die erste Kommunikationsverbindung und über die zweite Kommunikationsverbindung Informationen über den Zustand eines Lebensmittels und Befehle, die durch das erste Küchengerät oder durch das zweite Küchengerät durchgeführt werden sollen, übermittelt werden. Des Weiteren kann das Übermitteln für beide Kommunikationsverbindungen in Richtung der Steuereinheit und ausgehend von der Steuereinheit erfolgen.

Das erste Küchengerät weist mindestens ein Erfassungsmittel zum Erfassen von mindestens einer Information über den Zustand eines Lebensmittels auf. Das Erfassungsmittel kann unterschiedlich ausgebildet sein, zum Beispiel als optischer Sensor, Thermometer, Waage, Stoppuhr oder als Sensor für ein Drehmoment. Das erste Küchengerät kann ein einzelnes Erfassungsmittel oder mehrere Erfassungsmittel gleichzeitig aufweisen.

Das mindestens eine Erfassungsmittel kann, je nach Information, die erfasst werden soll, außerhalb des Gehäuses des ersten Küchengeräts oder innerhalb des Gehäuses des ersten Küchengeräts angeordnet sein. Wird zum Beispiel die Temperatur eines Lebensmittels erfasst, dann ist vorzugsweise ein Thermometer in dem ersten Küchengerät angeordnet. Weiterhin kann zum Beispiel ein Feuchtigkeitssensor an einer Außenwand des ersten Küchengeräts angeordnet sein, wenn eine Raumfeuchtigkeit erfasst werden soll. Dadurch kann zum Beispiel der Feuchtigkeitszustand von Zutaten ermittelt werden.

Der Zustand eines Lebensmittels kann durch Eigenschaften unterschiedliche Arten definiert werden, die je nach beabsichtigtem Zubereitungsvorgang relevant sein können, wie zum Beispiel ein Gewicht, ein Volumen, ein Mischungsverhältnis unterschiedlicher Zutaten, eine Menge bzw. eine Anzahl, eine Viskosität, ein Feuchtigkeitsgehalt, ein Bräunungsgrad, eine Farbe, ein Säuregehalt oder Weiteres.

Die mindestens eine erfasste Information entspricht vorzugsweise einem Istwert, der so ausgedrückt ist, dass dieser mit einem weiteren Wert für eine gleichartige Information vergleichbar ist. Wird zum Beispiel eine Information über einen Feuchtigkeitsgehalt erfasst, so kann dieser ein in Prozent ausgedrückter Relativwert sein.

Die mindestens eine erfasste Information kann sich indirekt aus dem Erfassen ergeben. Zum Beispiel kann durch einen optischen Sensor ein Bild aufgenommen werden, auf dem Lebensmittel abgebildet sind. Das Bild kann anschließend ausgewertet werden, indem erkannte Formgebungen, Farben und Lichtintensitäten des Bilds mit vordefinierten Referenzwerten für Formgebungen, Farben und Lichtintensitäten verglichen werden, wobei den Referenzwerten Lebensmittelarten und abgeschätzte Lebensmittelgewichte zugeordnet sein können. Aus dem Vergleich können eine Lebensmittelart bestimmt und gegebenenfalls ein Lebensmittelgewicht abgeschätzt werden.

Weiterhin kann das mindestens eine Erfassungsmittel nach Auswahl einer Zubereitungsvorschrift ein weiteres Erfassen von Informationen, die anschließend verwendet werden können, um zu prüfen, ob alle für die Zubereitungsvorschrift erforderliche Zutaten bzw. Lebensmittel in ausreichenden Mengen vorliegen.

Bei der Zubereitungsvorschrift handelt es sich insbesondere um mindestens einen Zubereitungsparameter oder Sollwert, der einen Zubereitungsvorgang oder einen erzielten Zustand des Lebensmittels betrifft. Ein solcher Zubereitungsparameter kann für eine der folgenden Größen gegeben sein: Lufttemperatur, Backzeit, Ruhezeit, eine Information über eine Uhrzeit, bei der ein Zubereitungsvorgang anfangen oder enden soll, Abstand zu einem Heizelement, Höhe für einen Gargutträger, Luftfeuchtigkeit, Lebensmittelinnentemperatur, Lebensmittelaußentemperatur, Lebensmittelformgebung, Lebensmittelfeuchte, Bräunungsgrad, Lebensmittelgewicht, Lebensmittelvolumen, Packdichte von Lebensmitteleinheiten auf einem Gargutträger oder Weiteres.

Die Zubereitungsvorschrift weist vorzugsweise mindestens zwei Zubereitungsvorschriftsvarianten auf, wobei sich diese Varianten durch Angaben über zum Beispiel Zutatenmengen oder Zutatenarten unterscheiden. Zum Zubereiten eines Brots können mehrere Varianten einer Zubereitungsvorschrift gegeben sein. Bei einer ersten Variante kann eine Menge M eines Glukose-haltigen Mehls angegeben sein; bei einer zweiten Variante kann eine Menge M eines Glukose-freien Mehls angegeben sein und bei einer dritten Variante kann eine zu der Menge M unterschiedliche Menge P des Glukose-haltigen Mehls angegeben sein. Je nach Variante wird das Zubereiten eines mittelgroßen, Glukose-haltigen Brots, eines mittelgroßen, Glukose-freien Brots oder eines kleinen, Glukose-haltigen Brots erzielt.

Eine Zubereitungsvorschrift entspricht vorzugsweise mindestens einer Zubereitungsanweisung eines Kochrezepts. Eine solche Zubereitungsanweisung kann zum Beispiel Gartemperaturen entsprechen, die für sukzessive Garzeiten eingehalten werden sollen, eine Ruhezeit, eine Zutatenmischung, ein Gewicht, ein Volumen oder weiteres sein.

Alternativ oder zusätzlich kann die Zubereitungsvorschrift mindestens einer Information über eine Eigenschaft des ersten Küchengeräts und/oder des zweiten Küchengeräts entsprechen. Eine solche Eigenschaft kann zum Beispiel eine Aufnahmekapazität, ein vorhersehbarer Verschleiß, eine empfohlene maximale Betriebstemperatur oder ein Tara-Gewicht für einen Vergleich mit einer erfassten Information über ein Gewicht sein. Eine solche Eigenschaft ist vorzugsweise dem betroffenen Küchengerät eigen und ist vorzugsweise im Voraus durch den Konstrukteur vorbestimmt.

Vorzugsweise ist mindestens eine Zubereitungsvorschrift zumindest vorübergehend auf dem Datenspeicher der Steuereinheit gespeichert.

Die Steuereinheit ist dazu eingerichtet, mindestens eine Zubereitungsvorschrift in Abhängigkeit der mindestens einen erfassten Information auszuwählen. Hierzu kann die Steuereinheit die erfasste Information mit einem Zubereitungsparameter von mindestens einer Zubereitungsvorschrift vergleichen, wobei der Zubereitungsparameter die gleiche Eigenschaft eines Lebensmittels betrifft, wie die erfasste Information. Aus dem Ergebnis des Vergleichs kann die Steuereinheit bestimmen, für welche Zubereitungsvorschrift sich die geringsten Unterschiede zwischen erfasster Information und entsprechendem Zubereitungsparameter ergibt.

Des Weiteren können mehrere Zubereitungsvorschriften ausgewählt werden, wenn diese mindestens eine gleiche Angabe aufweisen.

Das zweite Küchengerät ist dazu eingerichtet, einen Zubereitungsvorgang entsprechend der mindestens einen ausgewählten Zubereitungsvorschrift durchzuführen. Hierfür ist vorzugsweise das Steuerungsmodul des zweiten Küchengeräts dazu eingerichtet, Befehle zu erzeugen, deren Ausführen eine Reaktion des Heizelements entsprechend der ausgewählten Zubereitungsvorschrift bewirkt. Die Gesamtheit dieser Reaktionen bildet einen Zubereitungsvorgang.

Weiterhin weisen vorzugsweise die Zubereitungsvorschriften, die zur Auswahl vorliegen, Angaben über Zubereitungsparameter und Zubereitungsanweisungen auf, die durch das erste Küchengerät zumindest teilweise durchgeführt werden können. Ist zum Beispiel das erste Küchengerät als Backofen ausgebildet, der nur bis einer maximalen gegebenen Temperatur heizen kann, dann liegen nur Zubereitungsvorschriften zur Auswahl vor, für die nicht über diese maximale Temperatur geheizt bzw. erwärmt werden soll.

Alternativ oder zusätzlich können Eigenschaften des zweiten Küchengeräts als Suchkriterien für die Auswahl einer Zubereitungsvorschrift verwendet werden.

Im Folgenden werden verschiedene Ausführungsformen des Systems und des Verfahrens beschrieben, wobei die einzelnen Ausführungsformen jeweils sowohl für das System auch für das Verfahren gelten. Zudem sind die einzelnen Ausführungsformen untereinander kombinierbar.

Bei einer ersten Ausführungsform des Systems weist die Zubereitungsvorschrift mindestens zwei Zubereitungsvorschriftsvarianten mit unterschiedlichen Mengenangaben auf und die Steuereinheit ist dazu eingerichtet, eine der Zubereitungsvorschriftsvarianten in Abhängigkeit der mindestens einen erfassten Information auszuwählen.

Bei einer entsprechenden Ausführungsform des Verfahrens wird eine Zubereitungsvorschriftsvariante einer Zubereitungsvorschrift in Abhängigkeit von der mindestens einen erfassten Information ausgewählt.

Dadurch kann eine für tatsächlich vorhandene Lebensmittelmengen geeignete Variante einer Zubereitungsvorschrift automatisch ausgewählt werden.

Hierfür kann zum Beispiel die Steuereinheit erfasste Informationen mit Angaben mindestens einer Zubereitungsvorschrift bzw. mindestens einer Zubereitungsvorschriftsvariante vergleichen. Anhand des Ergebnisses des Vergleichs kann bestimmt werden, bei welcher Zubereitungsvorschriftsvariante der Unterschied zwischen erfassten Informationen und Angaben am geringsten ist.

Wenn die erfassten Informationen und Angaben als numerische Werte ausgedrückt sind, ergibt sich aus dem Vergleich ein Wert, der dem Unterschied entspricht. Anschließend kann dieser Wert mit einem Toleranzbereich verglichen werden. Liegt der Wert innerhalb des Toleranzbereichs, dann wird die Zubereitungsvorschriftsvariante ausgewählt. Liegt der Wert außerhalb des Toleranzbereichs, dann wird die Zubereitungsvorschriftsvariante nicht ausgewählt und gegebenenfalls eine Meldung angezeigt, dass keine zutreffende Zubereitungsvorschriftsvariante ausgewählt werden konnte.

Bei einer weiteren Ausführungsform des Systems ist die Steuereinheit dazu eingerichtet, eine neue Zubereitungsvorschriftsvariante auf Basis der ausgewählten Zubereitungsvorschrift zu bestimmen.

Bei einer entsprechenden Ausführungsform des Verfahrens wird eine neue Zubereitungsvorschriftsvariante auf Basis mindestens einer vorhandenen Zubereitungsvorschriftsvariante und in Abhängigkeit von der mindestens einen erfassten Information bestimmt.

Dadurch kann eine Zubereitungsvorschrift bzw. eine Variante einer Zubereitungsvorschrift an die tatsächlichen Eigenschaften eines vorhandenen Lebensmittels angepasst werden. So wird der Aufwand für einen Nutzer und gleichzeitig die Gefahr zum Beispiel beim Berechnen einer angebrachten Zutatenmenge verringert.

Anhand des Vergleichs zwischen den erfassten Informationen und den Angaben von Zubereitungsvorschriften bzw. Zubereitungsvorschriftvarianten kann bestimmt werden, welche Angaben zu den erfassten Informationen am nächsten kommt. Jedoch kann sich ein gegebenenfalls bestehender Unterschied als zu groß erweisen, um eine ausgewählte Zubereitungsvorschriftsvariante tatsächlich durchführen zu können.

Durch das System und das Verfahren können Angaben einer Zubereitungsvorschriftsvariante, die den erfassten Informationen am nächsten kommen, geändert werden. Es können nur eine einzelne Angabe oder mehrere Angaben gleichzeitig geändert werden.

Handelt es sich zum Beispiel um das Ändern einer Zutatenmengenangabe, kann zum Bestimmen von neuen Zutatenmengenangaben ein mathematisches Größenverhältnis verwendet werden, das zwischen Zutatenmengenangaben für unterschiedliche Zutaten der vorhandenen Zubereitungsvorschriftsvariante herrscht. Zum Beispiel kann eine Zubereitungsvorschriftsvariante für eine Tomatensauce mit einer Zutatenmenge X für Tomaten und einer Zutatenmenge Y für Sahne vorliegen und eine Menge Z für Tomaten erfasst werden, wobei Z kleiner als X ist. Dann kann aus der Beziehung zwischen X und Y eine neue Zutatenmenge für Sahne berechnet werden, die zu der tatsächlich vorhandenen Menge Z passt.

Alternativ oder zusätzlich kann zum Beispiel eine Angabe für eine Lebensmittelart geändert werden, um eine neue Zubereitungsvorschriftsvariante zu bestimmen. Beispielsweise können das Vorhandensein und die Mengen von mehreren Lebensmitteln festgestellt werden. Zudem kann eine Zubereitungsvorschrift ausgewählt werden, die nur einige dieser Lebensmittel als Zutaten aufweist. Dann kann eine neue Variante dieser Zubereitungsvorschrift auf Basis der tatsächlich vorhandenen Lebensmittel bestimmt werden, indem zum Beispiel Äpfel durch Birnen für das Zubereiten eines Kuchens ersetzt werden.

Bei einer weiteren Ausführungsform des Systems weist die vorhandene Zubereitungsvorschrift mindestens eine Angabe über eine Zutatenmenge auf und die neue Zubereitungsvorschriftsvariante entspricht einem Skalieren der mindestens einen Angabe.

Bei einer entsprechenden Ausführungsform des Verfahrens wird die neue Zubereitungsvorschriftsvariante durch Skalieren mindestens einer durch die ausgewählte Zubereitungsvorschrift vorgegebenen Angabe über eine Zutatenmenge bestimmt.

Dadurch werden ein Berechnen von Zutatenmengen und somit auch das Bestimmen der neuen Zubereitungsvorschriftsvariante vereinfacht.

Unter dem Begriff Skalieren wird das Verwenden einer anpassbaren Variablen beispielsweise eines Prozentsatzes für das Bestimmen bzw. Berechnen neuer Angaben verstanden. Beispielsweise kann eine tatsächlich vorhandene Lebensmittelmenge einem Prozentsatz einer Angabe einer Zubereitungsvorschriftsvariante über eine Zutatenmenge für das Lebensmittel entsprechen. Dann kann dieser Prozentsatz zum Berechnen weiterer Angaben über eine Zutatenmenge der Zubereitungsvorschrift verwendet werden.

Bei einer weiteren Ausführungsform des Systems ist die Steuereinheit dazu eingerichtet, eine Zubereitungsvorschrift in Abhängigkeit einer Nutzereingabe auszuwählen.

Bei einer entsprechenden Ausführungsform des Verfahrens wird mindestens eine Zubereitungsvorschrift in Abhängigkeit einer Nutzereingabe ausgewählt.

Dadurch kann eine Zubereitungsvorschrift nicht nur in Abhängigkeit von Eigenschaften vorhandener Lebensmittel ausgewählt werden, sondern auch auf Basis individueller Wünsche eines Nutzers. Im Allgemeinen können dadurch zusätzliche Suchkriterien für die Auswahl einer Zubereitungsvorschrift berücksichtigt werden.

Unter dem Begriff Nutzereingabe wird eine Information verstanden, die ein Nutzer durch eine Benutzerschnittstelle in dem System bzw. in die Steuereinheit eingibt. Hierzu weist die Steuereinheit vorzugsweise eine Benutzerschnittstelle auf, die beispielsweise als Touchscreen, Tastatur, Tonaufnahmeeinrichtung, optische Aufnahmeeinrichtung oder weiteres ausgebildet ist. Vorzugsweise ist die Benutzerschnittstelle mit dem Datenspeicher der Steuereinheit verbunden. Dadurch können Informationen über die Benutzerschnittstelle eingegeben werden und auf dem Datenspeicher gespeichert werden.

Eine Zubereitungsvorschrift wird in Abhängigkeit von der Nutzereingabe ausgewählt. Dies erfolgt vorzugsweise in gleicher Weise, wie die Auswahl der Zubereitungsvorschrift in Abhängigkeit der durch das erste Küchengerät erfassten Informationen. Demnach wird die Nutzereingabe vorzugsweise als weiteres Suchkriterium für die Auswahl verwendet. Insbesondere kann die Nutzereingabe mit Angaben mindestens einer Zubereitungsvorschrift verglichen werden und entsprechend die Zubereitungsvorschrift ausgewählt werden, für die der Unterschied am geringsten ist.

Ein Bespiel für eine Nutzereingabe ist eine Einschränkung auf Zubereitungsvorschriften mit besonderen Zutaten. Dadurch kann ein Allergiker sicherstellen, dass nur Zubereitungsvorschriften ausgewählt werden, die einem Zubereiten von Lebensmitteln entsprechen, die für ihn ungefährlich sind.

Als weiteres Beispiel kann eine Personenzahl, für die das Zubereitungsergebnis geeignet sein soll, von einem Nutzer eingegeben werden und als Suchkriterium berücksichtigt werden.

Noch als weiteres Beispiel können Eigenschaften weiterer vorhandener Lebensmittel als Nutzereingabe eingegeben werden, wobei keine Information über diese Lebensmittel durch das erste Küchengerät erfasst wird. Diese weiteren vorhandenen Lebensmittel können beispielsweise Gewürze, Wasser, Milch oder Weiteres sein, wobei der Nutzer weißt, dass diese tatsächlich vorhanden sind.

Bei einer weiteren Ausführungsform des Systems ist die Steuereinheit über eine dritte Kommunikationsverbindung mit einer externen Datenbank für Zubereitungsvorschriften verbunden und die Steuereinheit ist dazu eingerichtet, die Zubereitungsvorschrift aus der externen Datenbank auszuwählen.

Bei einer entsprechenden Ausführungsform des Verfahrens wird mindestens eine Zubereitungsvorschrift aus einer externen Datenbank ausgewählt.

Dadurch kann auf eine gegebenenfalls größere Vielfalt an Zubereitungsvorschriften zugegriffen werden, so dass die Anzahl an Möglichkeiten, durch das System Lebensmittel zuzubereiten, erhöht wird.

Unter dem Begriff Datenbank werden alle Medien verstanden, auf denen mindestens eine Zubereitungsvorschrift digital gespeichert werden kann, wie zum Beispiel eine Festplatte, eine Cloud, ein Server oder Ähnliches. Weiterhin werden als externe Datenbank vorzugsweise Medien verstanden, die nicht als Teil des ursprünglich vorgesehenen Datenspeichers der Steuereinheit ausgebildet sind, und die über eine Kommunikationsverbindung mit der Steuereinheit verbunden werden können. Hierzu kommen zum Beispiel folgende Medien in Betracht: USB-Sticks, externe Festplatten, Tablets, Computer, Wearables und Rechnereinheiten im Allgemeinen, Internet, Cloud, Speichermedium eines privates Netzwerk und Weiteres.

Die dritte Kommunikationsverbindung ist vorzugsweise drahtlos und kann auf einem üblich angewendeten Protokoll wie Bluetooth, Infrarot oder WLAN (wireless local area network) basieren. Ein hierfür eventuell erforderliches Umwandeln von Signalen kann durch die Steuereinheit erfolgen.

Mindestens eine Zubereitungsvorschrift kann aus einer externen Datenbank ausgewählt werden. Hierfür ist die Steuereinheit vorzugsweise dazu eingerichtet, Zubereitungsvorschriften aus der externen Datenbank über die dritte Kommunikationsverbindung aufzurufen und Angaben dieser Zubereitungsvorschriften mit erfassten Informationen bzw. Nutzereingaben zu vergleichen.

Die Nutzereingabe kann eine durch das erste Küchengerät erfasste Information betreffen und verwendet werden, um die erfasste Information zu ändern. Wird zum Beispiel eine Information über eine Lebensmittelmenge oder ein Lebensmittelgewicht erfasst, dann kann durch eine Nutzereingabe eine geringere Lebensmittelmenge für die Auswahl einer Zubereitungsvorschrift berücksichtigt werden.

Als konkretes Beispiel kann ein Gewicht G an Kartoffeln erfasst werden und eine Nutzereingabe mit einem Gewicht H an Kartoffeln eingegeben werden, wobei das Gewicht H kleiner ist als das Gewicht G. Dies kann zum Beispiel erfolgen, wenn der Nutzer einen Anteil der Kartoffel für ein weiteres Zubereiten einsetzen will. So kann als Suchkriterium für die Auswahl einer Zubereitungsvorschrift eher das Gewicht H, als das Gewicht G berücksichtigt werden.

Bei einer weiteren Ausführungsform des Systems ist das erste Küchengerät dazu eingerichtet, mindestens einen Zubereitungsvorgang entsprechend der mindestens einen ausgewählten Zubereitungsvorschrift durchzuführen.

Bei einer entsprechenden Ausführungsform des Verfahrens wird mindestens ein Zubereitungsvorgang entsprechend der mindestens einen ausgewählten Zubereitungsvorschrift durch das erste Küchengerät durchgeführt.

So kann eine Zubereitungsvorschrift ausgewählt werden, für die ein Zubereitungsvorgang durch das zweite Küchengerät und ein weiterer Zubereitungsvorgang durch das erste Küchengerät durchgeführt werden müssen. Als konkretes Beispiel kann eine ausgewählte Zubereitungsvorschrift einem Zubereiten eines marinierten Stücks Fleisch entsprechen. Dabei soll zunächst eine Marinade durch das zweite Küchengerät zubereitet werden und anschließend das marinierte Stück Fleisch durch das erste Küchengerät gegart werden.

Des Weiteren kann das zweite Küchengerät Erfassungsmittel zum Erfassen mindestens einer Information über eine Eigenschaft eines Lebensmittels aufweisen. So können diese Informationen für die Auswahl einer Zubereitungsvorschrift als Suchkriterien verwendet werden.

Als weitere Suchkriterien können ebenfalls Eigenschaften des ersten Küchengeräts verwendet werden, so dass am die Vorbereitungsvorschrift nicht nur in Abhängigkeit von Eigenschaften von Lebensmitteln ausgewählt werden kann, sondern auch in Abhängigkeit der Möglichkeiten, die das erste Küchengerät für einen Zubereitungsvorgang bieten.

Bei einer weiteren Ausführungsform des Systems ist das erste Küchengerät, das zweite Küchengerät und/oder die Steuereinheit dazu eingerichtet ist, die mindestens eine ausgewählte Zubereitungsvorschrift anzuzeigen.

Bei einer entsprechenden Ausführungsform des Verfahrens wird die mindestens eine ausgewählte Zubereitungsvorschrift durch ein weiteres Küchengerät angezeigt.

Dadurch kann ein Ausführen eines Zubereitungsvorgangs gemäß der ausgewählten Zubereitungsvorschrift durch das zweite Küchengerät vereinfacht werden. Weiterhin kann dadurch ein Nutzer zum Beispiel auf eine zu geringe Zutatenmenge oder auf ein zu geringes Zutatengewicht aufmerksam gemacht werden.

Hierzu weist das zweite Küchengerät vorzugsweise eine Anzeigeeinrichtung auf. Die Anzeigeeinrichtung kann zum Beispiel ein Bildschirm oder eine durch Berührung bedienbare Anzeigeeinrichtung sein. Wenn mehrere Zubereitungsvorschriften ausgewählt worden sind, können diese durch das zweite Küchengerät gleichzeitig angezeigt werden.

Die Anzeigeeinrichtung kann auch zum Anzeigen mindestens einer erfassten Information eingerichtet sein.

Bei einer weiteren Ausführungsform des Systems ist die Steuereinheit in dem ersten Küchengerät oder in dem zweiten Küchengerät integriert.

Dadurch kann das System einfacher ausgestaltet werden. Dadurch kann weiterhin die Kundenverbundenheit erhöht werden, in dem das Vorhandensein des Kochmixers für ein optimales Steuern des Küchengeräts notwendig wird.

Unter dem Begriff Integrieren wird ein Anordnen der Steuereinheit an dem oder in dem Gehäuse des ersten Küchengeräts bzw. des zweiten Küchengeräts verstanden. Bei einer weiteren Ausführungsform des Systems weist die Steuereinheit mindestens ein Erfassungsmittel zum Erfassen mindestens einer Information über eine Eigenschaft eines Lebensmittels auf und ist dazu eingerichtet, eine Zubereitungsvorschrift in Abhängigkeit der mindestens einen durch die Erfassungsmittel der Steuereinheit erfassten Information auszuwählen.

Bei einer entsprechenden Ausführungsform des Verfahrens wird mindestens eine Information über eine Eigenschaft eines Lebensmittels durch die Steuereinheit erfasst und eine Zubereitungsvorschrift wird in Abhängigkeit der mindestens einen durch die Steuereinheit erfassten Information ausgewählt.

Dadurch können Informationen über Lebensmitteln erfasst werden, die zum Beispiel aufgrund der Größe oder Beschaffenheit des Lebensmittels nicht durch das erste Küchengerät erfasst werden können. Weiterhin kann dadurch eine Information schnell und einfach erfasst werden, insbesondere wenn die Steuereinheit als mobiles Gerät ausgebildet ist.

Vorzugsweise ist für dieses System die Steuereinheit außerhalb des Gehäuses eines der Küchengeräte angeordnet.

Das mindestens eine Erfassungsmittel der Steuereinheit kann ähnlicher oder unterschiedlicher Natur wie ein Erfassungsmittel des ersten Küchengeräts sein. Beispielsweise können ein Erfassungsmittel des ersten Küchengeräts als Waagemodul und ein Erfassungsmittel der Steuereinheit als optischer Sensor ausgebildet sein.

Zum Beispiel kann das erste Küchengerät als Backofen und die Steuereinheit als Tablet mit einer Kamera ausgebildet sein. Dadurch kann ein helleres Bild eines Lebensmittels vor Einführen in dem Backofen erfasst werden, als durch zum Beispiel eine in dem Garraum des Backofens angeordnete Kamera.

Ist zum Beispiel die Steuereinheit als Tablet mit einer Kamera ausgebildet, dann können Informationen über Lebensmittel erfasst werden, die an einer von dem ersten Küchengerät entfernten räumlichen Position angeordnet sind. Dadurch können zum Beispiel Informationen über Lebensmittel erfasst werden, die in einer Speisekammer angeordnet sind, wobei das erste Küchengerät ein in einer Küche fest eingebautes Küchengerät ist.

Weiterhin kann das Berücksichtigen einer durch die Steuereinheit erfassten Information in einem zweiten Auswahlvorgang erfolgen. So können zum Beispiel in einem ersten Auswahlvorgang mehrere Zubereitungsvorschriften ausgewählt werden. Anschließen kann eine durch die Steuereinheit erfasste Information als Suchkriterium zum Einschränken des Ergebnisses des ersten Auswahlvorgangs verwendet werden.

Alternativ oder zusätzlich kann ein Erfassungsmittel als zusätzliches Element des Systems vorgesehen sein, das mit der Steuereinheit, mit dem ersten Küchengerät oder mit dem zweiten Küchengerät über eine Kommunikationsverbindung verbunden ist. So kann zum Beispiel eine optische Kamera ein Bild mindestens eines Lebensmittels aufnehmen, das dann zum Auswerten an die Steuereinheit übermittelt wird. Anschließend kann eine so erhaltene Information über eine Eigenschaft eines Lebensmittels für eine Auswahl einer Zubereitungsvorschrift verwendet werden.

Die Steuereinheit, das erste Küchengerät und das zweite Küchengerät können zum Anzeigen mindestens einer Zubereitungsvorschrift und oder mindestens einer erfassten Information eingerichtet sein. So können einem Nutzer auf allen Elementen des Systems Informationen angezeigt werden, die zum Zubereiten von Speisen relevant sind. Dadurch wird eine Verwendung des Systems vereinfacht.

Im Folgenden werden bevorzugte Ausführungsbeispiele der Erfindung anhand der beigefügten Zeichnung näher erläutert. In der Zeichnung zeigen
- Fig. 1: ein erstes Ausführungsbeispiel eines Systems zum Zubereiten von Lebensmitteln in einer schematischen Darstellung,
- Fig. 2: ein weiteres Ausführungsbeispiel eines Systems zum Zubereiten von Lebensmitteln in einer schematischen Darstellung,
- Fig. 3: ein erstes Beispiel für eine Zubereitungsvorschrift mit zwei Zubereitungsvorschriftsvarianten in einer tabellarischen Form und
- Fig. 4: ein weiteres Beispiel für eine Zubereitungsvorschrift mit zwei Zubereitungsvorschriftsvarianten in einer tabellarischen Form.

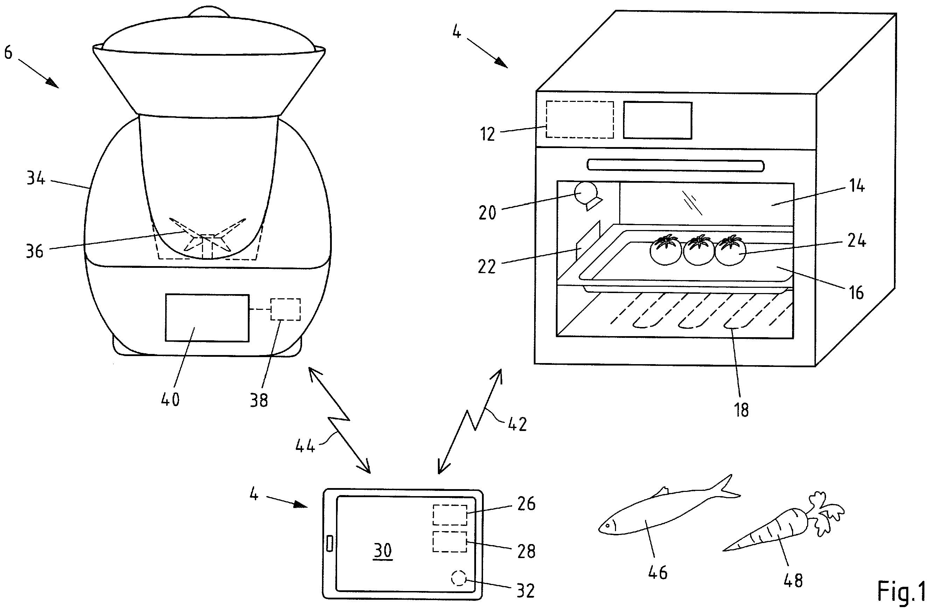

Fig. 1 zeigt ein erstes Ausführungsbeispiel eines Systems 2 zum Zubereiten von Lebensmitteln in einer schematischen Darstellung, wobei das System 2 ein erstes Küchengerät 4 in Form eines Backofens, ein zweites Küchengerät 6 in Form eines Kochmixers und eine Steuereinheit 8 in Form eines Tablets aufweist.

Das erste Küchengerät 4 weist ein Gehäuse 10, ein Steuerungsmodul 12, ein Aufnahmevolumen 14, ein Gargutträger 16 und ein Heizelement 18 auf. Zudem weist das erste Küchengerät 4 Erfassungsmittel in Form einer optischen Kamera 20 und eines Waagemoduls 22 auf, die jeweils zum Erfassen einer Information über eine Lebensmittelart und einer Information über ein Lebensmittelgewicht eingerichtet sind. Die Erfassungsmittel 20, 22 sind in dem Aufnahmevolumen 14 angeordnet.

Die optische Kamera 20 ist dazu eingerichtet, ein Bild vom Inneren des Aufnahmevolumens 14 zu erfassen, das anschließend durch das Steuerungsmodul 12 des ersten Küchengeräts 4 ausgewertet wird, um zum Beispiel das Vorhandensein einer Lebensmittelart, beispielsweise "Tomate", festzustellen.

Das Waagemodul 22 ist in Kontakt mit dem Gargutträger 16 und dazu eingerichtet, ein Gewichtsunterschied zwischen dem Gewicht des Gargutträgers 16, wenn er leer ist, und dem Gewicht des Gargutträgers 16 zusammen mit einem auf dem Gargutträger 16 aufgenommenen Lebensmittel, wie hier Tomaten 24, zu erfassen. Dadurch wird das Gewicht des gegebenenfalls aufgenommenen Lebensmittels ermittelt.

Die Steuereinheit 8 weist ein Gehäuse 25, einen Datenspeicher 26, einen Mikroprozessor 28, einen Touchscreen 30, der die Funktionen einer Anzeigeeinrichtung und die Funktionen einer Benutzerschnittstelle aufweist, und ein Erfassungsmittel 32 in Form einer optischen Kamera auf.

Das Erfassungsmittel 32 der Steuereinheit 8 ist zum Erfassen von Bildern eingerichtet, die anschließend ausgewertet werden, um Informationen über abgebildete Lebensmittel zu ermitteln. Hierfür ist auf dem Datenspeicher 26 ein entsprechender Algorithmus gespeichert, dessen Ausführen auf dem Mikroprozessor 28 ein Auswerten mindestens eines erfassen Bilds bewirkt.

Auf dem Datenspeicher 26 der Steuereinheit 8 sind eine Mehrzahl an Zubereitungsvorschriften und ein Algorithmus zum Vergleichen von erfassten Informationen mit Angaben der Zubereitungsvorschriften gespeichert.

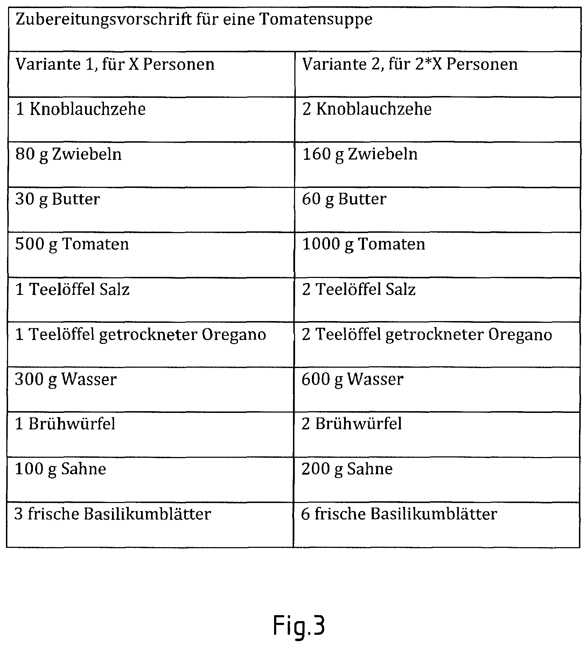

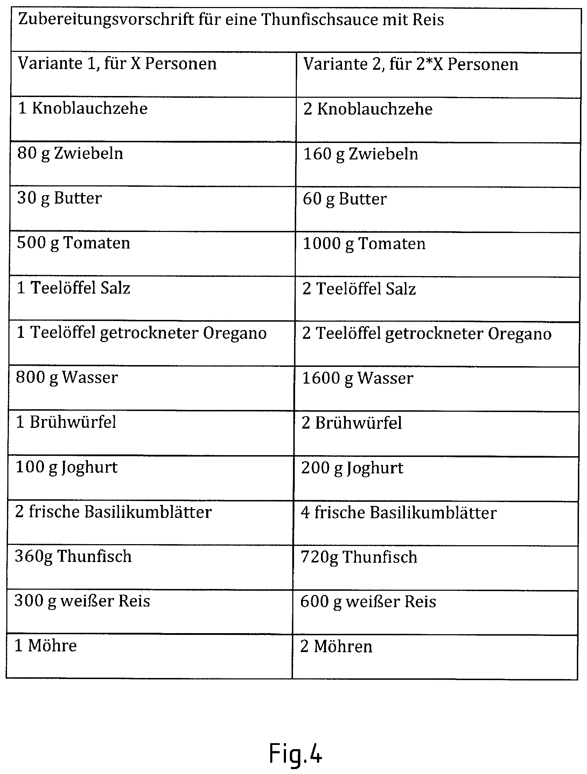

Die gespeicherten Zubereitungsvorschriften weisen jeweils mindestens zwei Zubereitungsvorschriftsvarianten mit unterschiedlichen Angaben über Zutatenmengen auf. Zwei Beispiele für Angaben einer Zubereitungsvorschrift über Zutatenmengen sind in den Fig. 3 und 4 gegeben, wobei für jede Zubereitungsvorschrift zwei Zubereitungsvorschriftsvarianten gezeigt sind. Die Zubereitungsvorschriften entsprechen jeweils einem Zubereiten einer Tomatensuppe und einem Zubereiten einer Thunfischsauce mit Reis. Die erste Variante der Zubereitungsvorschrift in der ersten Spalte der Tabelle in Fig. 3 ist für eine Tomatensuppe für 2 Personen ausgelegt. Die erste Variante der Zubereitungsvorschrift in der ersten Spalte der Tabelle in Fig. 4 ist für eine Thunfischsuppe mit Reis für 4 Personen ausgelegt. Zwischen den Angaben für Lebensmittelmengen der ersten Variante und der zweiten Variante einer Zubereitungsvorschrift herrscht ein Faktor 2.

Weiterhin weisen die Zubereitungsvorschriften Zubereitungsanweisungen auf, die unterschiedlichen Zubereitungsvorgängen auf dem ersten Küchengerät 4 und auf dem zweiten Küchengerät 6 entsprechen.

Das zweite Küchengerät 6 weist ein Gehäuse 34, eine Zerkleinerungseinrichtung 36, ein Steuerungsmodul 38 und eine Anzeigeeinrichtung 40 auf.

Die Steuereinheit 8 ist über eine erste Kommunikationsverbindung 42 mit dem ersten Küchengerät 4 und über eine zweite Kommunikationsverbindung 44 mit dem zweiten Küchengerät 6 verbunden. Beide Kommunikationsverbindungen 42, 44 sind drahtlos und basieren auf einer WLAN Technologie. Darüber hinaus ermöglichen beide Kommunikationsverbindungen 42, 44 für ein Übermitteln von Informationen in der Richtung ausgehend von der Steuereinheit 8 und in der Richtung zu der Steuereinheit 8.

Es liegen Lebensmittel 24, 46, 48 unterschiedlicher Art vor: ein Thunfisch 46, eine Möhre 48 und drei Tomaten 24.

Im Folgenden wird ein Verfahren zum Zubereiten von Lebensmitteln mit dem System 2 der Fig. 1 exemplarisch beschrieben.

Zunächst werden die Tomaten 24 auf dem Gargutträger 16 in dem ersten Küchengerät 4 aufgelegt. Dann wird durch die optische Kamera 20 ein Bild aufgenommen, dass anschließend durch das Steuerungsmodul 12 des ersten Küchengeräts 4 ausgewertet wird. Aus dem Auswerten ergibt sich eine Information über eine Lebensmittelart, in dem Fall "Tomate". Gleichzeitig erfasst das Waagemodul 22 eine Information über ein Lebensmittelgewicht, in dem Fall das Gewicht der Tomaten 24, das 500 g entspricht. Anschließend werden die erfassten Informationen, also die Information über die Lebensmittelart und die Information über das Lebensmittelgewicht über die erste Kommunikationsverbindung 42 an die Steuereinheit 8 übermittelt.

Anschließend wird der Algorithmus auf dem Mikroprozessor 28 der Steuereinheit 8 ausgeführt, wobei die erfassten Informationen als Suchkriterien für einen Vergleich mit gleichartigen Angaben der Zubereitungsvorschriften verwendet werden. Aus dem Vergleich ergibt sich, dass die Angaben der jeweiligen ersten Varianten der zwei Zubereitungsvorschriften der Fig. 3 und 4 den erfassten Informationen am Nächsten sind, da diese Angaben für 500 g Tomaten aufweisen. Diese Zubereitungsvorschriftsvarianten werden durch den Touchscreen 30 der Steuereinheit 8 angezeigt.

Anschließend wird durch das Erfassungsmittel 32 der Steuereinheit 8 ein Bild aufgenommen und ausgewertet, auf dem der Thunfisch 46 und die Möhre 48 abgebildet sind. Nach Auswerten ergeben sich die Informationen über das Vorhandensein von Lebensmitteln der Lebensmittelarten "Thunfisch" und "Möhre". Diese Informationen werden dann mit den Angaben der bereits ausgewählten zwei Zubereitungsvorschriftsvarianten verglichen. Aus dem Vergleich ergibt sich, dass die Zubereitungsvorschriftsvariante, die einem Zubereiten einer Thunfischsauce mit 500 g Tomaten, den insgesamt erfassten Informationen am Nächsten ist. Die so ausgewählte Zubereitungsvorschriftsvariante wird dann durch den Touchscreen 30 der Steuereinheit 8 angezeigt

Anschließend werden Signale, die der ausgewählten Zubereitungsvorschriftsvariante entsprechen, über die zweite Kommunikationsverbindung 44 an das zweite Küchengerät 6 übermittelt und durch dessen Anzeigeeinrichtung 40 angezeigt, so dass Zubereitungsanweisungen der ausgewählten Zubereitungsvorschriftsvariante bei einem entsprechenden Zubereitungsvorgang auf dem zweiten Küchengerät 6 durchgeführt werden können.

Zeitgleich mit dem Durchführen des Zubereitungsvorgangs durch das zweite Küchengerät 6 wird das erste Küchengerät 4 gemäß Zubereitungsanweisungen der ausgewählten Zubereitungsvorschriftsvariante vorgeheizt.

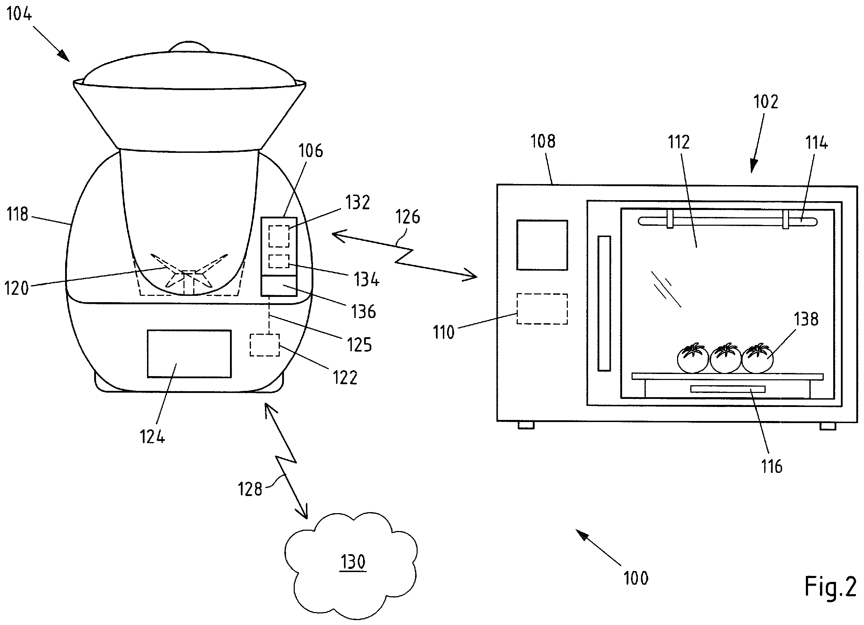

Fig. 2 zeigt ein weiteres Ausführungsbeispiel eines Systems 100 zum Zubereiten von Lebensmitteln in einer schematischen Darstellung. Das System 100 weist ein erstes Küchengerät 102 in Form eines Mikrowellenofens, ein zweites Küchengerät 104 in Form eines Kochmixers und eine Steuereinheit 106 auf, wobei die Steuereinheit 106 in dem zweiten Küchengerät 104 integriert ist.

Das erste Küchengerät 102 weist ein Gehäuse 108, ein Steuerungsmodul 110, ein Aufnahmevolumen 112 und ein Heizelement 114 auf, wobei das Steuerungsmodul 110 zum Steuern des Heizelements 114 eingerichtet ist. Zudem weist das erste Küchengerät 102 ein Erfassungsmittel 116 in Form eines Waagemoduls auf, das zum Erfassen einer Information über ein Lebensmittelgewicht eingerichtet ist, und das in dem Aufnahmevolumen 112 angeordnet ist.

Das zweite Küchengerät 104 weist ein Gehäuse 118, eine Mischungseinrichtung 120, ein Steuerungsmodul 122 und eine Anzeigeeinrichtung 124 auf.

Die Steuereinheit 106 ist in dem Gehäuse 118 des zweiten Küchengeräts 104 angeordnet und über eine direkte zweite Kommunikationsverbindung 125 mit dem zweiten Küchengerät 104 verbunden. Die Steuereinheit 106 ist über eine erste, drahtlose Kommunikationsverbindung 126 mit dem ersten Küchengerät 102 und über eine dritte, ebenfalls drahtlose Kommunikationsverbindung 128 mit einer externen Datenbank 130 verbunden. Des Weiteren weist die Steuereinheit 106 einen Datenspeicher 132, einen Mikroprozessor 134 und eine Benutzerschnittstelle 136 zum Erfassen von Nutzereingaben auf.

Auf der externen Datenbank 130 sind Zubereitungsvorschriften gespeichert. Die Steuereinheit 106 ist dazu eingerichtet, Zubereitungsvorschriften über die dritte Kommunikationsverbindung 128 aus der externen Datenbank 130 aufzurufen und gegebenenfalls vorübergehend auf dem Datenspeicher 132 der Steuereinheit 106 zu speichern.

In der Fig. 2 sind Lebensmittel 138 in Form von Tomaten gezeigt.

Im Folgenden wird ein Verfahren zum Zubereiten von Lebensmitteln mit dem System 100 der Fig. 2 exemplarisch beschrieben.

Zunächst werden die Lebensmittel 138 in dem Aufnahmevolumen 112 und auf das Erfassungsmittel 116 des ersten Küchengeräts 102 gelegt. Anschließend erfasst das Erfassungsmittel 116 eine Information über ein Lebensmittelgewicht von 1000 g, die dann über die erste Kommunikationsverbindung 126 an die Steuereinheit 106 übermittelt wird. Dann erfasst die Steuereinheit 106 durch die Benutzerschnittstelle 136 eine erste Nutzereingabe über eine Lebensmittelart, in dem Fall "Tomate", und eine zweite Nutzereingabe über einen Ausschluss von Fleisch- und Fischprodukten.

Anschließend verwendet die Steuereinheit 106 die erste Nutzereingabe und die durch das erste Küchengerät 102 erfasste Information, um ein Suchkriterium "1000 g Tomaten" zu erzeugen. In einem ersten Auswahlvorgang vergleicht die Steuereinheit 106 das Suchkriterium mit Angaben von Zubereitungsvorschriften, die Lebensmittelarten und Lebensmittelgewichte betreffen. Aus dem Vergleich ergeben sich die jeweiligen zweiten Zubereitungsvorschriftsvarianten der oben gezeigten Zubereitungsvorschriften.

In einem zweiten Auswahlvorgang vergleicht die Steuereinheit 106 die zweite Nutzereingabe mit Angaben über Zutatenarten bzw. mit Ausschluss von Fleisch- und Fischprodukten mit den beim ersten Auswahlvorgang ausgewählten Zubereitungsvorschriftsvarianten. Aus dem Vergleich ergibt sich die zweite Variante der Zubereitungsvorschrift für ein Zubereiten einer Tomatensuppe. Diese Variante wird durch die Anzeigeeinrichtung 124 des zweiten Küchengeräts 104 angezeigt. Anschließend erfasst die Benutzerschnittstelle 136 eine Nutzereingabe über eine Personenzahl, in dem Fall 3 Personen. Die Steuereinheit 106 verwendet diese Nutzereingabe um eine neue, dritte Variante zu berechnen, deren Angaben den Angaben über Zutatenmengen der ausgewählten Zubereitungsvorschriftsvariante mit einem Faktor 0,75 entsprechen. Anschließend wird die neue Zubereitungsvorschriftsvariante mit den so berechneten Zutatenmengen durch die Anzeigeeinrichtung 124 des zweiten Küchengeräts 104 angezeigt und deren Zubereitungsanweisungen gefolgt.

## Patentansprüche

1. System zum Zubereiten von Lebensmitteln,
- mit einem ersten Küchengerät (4, 102),
- mit einem zweiten Küchengerät (6, 104) und
- mit einer Steuereinheit (8, 106),
- wobei das erste Küchengerät (4, 102) mindestens ein Erfassungsmittel (20, 22, 116) zum Erfassen mindestens einer Information über eine Eigenschaft eines Lebensmittels (24, 138) aufweist,
- wobei die Steuereinheit (8, 106) über eine erste Kommunikationsverbindung (42, 126) mit dem ersten Küchengerät (4, 102) verbunden ist und
- wobei die Steuereinheit (8, 106) über eine zweite Kommunikationsverbindung (44, 125) mit dem zweiten Küchengerät (6, 104) verbunden ist,
**dadurch gekennzeichnet,**
- **dass** die Steuereinheit (8, 106) dazu eingerichtet ist, mindestens eine Zubereitungsvorschrift in Abhängigkeit der mindestens einen erfassten Information auszuwählen und
- **dass** das zweite Küchengerät (6, 104) dazu eingerichtet ist, einen Zubereitungsvorgang entsprechend der mindestens einen ausgewählten Zubereitungsvorschrift durchzuführen.

2. System nach Anspruch 1,
**dadurch gekennzeichnet,**
- **dass** die Zubereitungsvorschrift mindestens zwei Zubereitungsvorschriftsvarianten mit unterschiedlichen Mengenangaben aufweist und
- **dass** die Steuereinheit (8, 106) dazu eingerichtet ist, eine der Zubereitungsvorschriftsvarianten in Abhängigkeit der mindestens einen erfassten Information auszuwählen.

3. System nach Anspruch 1 oder 2,
**dadurch gekennzeichnet,**
**dass** die Steuereinheit (8, 106) dazu eingerichtet ist, eine neue Zubereitungsvorschriftsvariante auf Basis der ausgewählten Zubereitungsvorschrift und in Abhängigkeit der mindestens einen erfassten Information zu bestimmen.

4. System nach Anspruch 3,
**dadurch gekennzeichnet,**
- **dass** die vorhandene Zubereitungsvorschrift mindestens eine Angabe über eine Zutatenmenge aufweist und
- **dass** die neue Zubereitungsvorschriftsvariante einem Skalieren der mindestens einen Angabe entspricht.

5. System nach einem der Ansprüche 1 bis 4,
**dadurch gekennzeichnet,**
**dass** die Steuereinheit (8, 106) dazu eingerichtet ist, eine Zubereitungsvorschrift in Abhängigkeit einer Nutzereingabe auszuwählen.

6. System nach einem der Ansprüche 1 bis 5,
**dadurch gekennzeichnet,**
- **dass** die Steuereinheit (8, 106) über eine dritte Kommunikationsverbindung (128) mit einer externen Datenbank (130) für Zubereitungsvorschriften verbunden ist und
- **dass** die Steuereinheit (8, 106) dazu eingerichtet ist, die Zubereitungsvorschrift aus der externen Datenbank (130) auszuwählen.

7. System nach einem der Ansprüche 1 bis 6,
**dadurch gekennzeichnet,**
**dass** das erste Küchengerät (4, 102) dazu eingerichtet ist, mindestens einen Zubereitungsvorgang entsprechend der mindestens einen ausgewählten Zubereitungsvorschrift durchzuführen.

8. System nach einem der Ansprüche 1 bis 7,
**dadurch gekennzeichnet,**
**dass** das erste Küchengerät (4, 102), das zweite Küchengerät (6, 104) und/oder die Steuereinheit (8, 106) dazu eingerichtet ist, die mindestens eine ausgewählte Zubereitungsvorschrift anzuzeigen.

9. System nach einem der Ansprüche 1 bis 8,
**dadurch gekennzeichnet,**
**dass** die Steuereinheit (8, 106) in dem ersten Küchengerät (4, 102) oder in dem zweiten Küchengerät (6, 104) integriert ist.

10. System nach einem der Ansprüche 1 bis 9,
**dadurch gekennzeichnet,**
- **dass** die Steuereinheit (8, 106) mindestens ein Erfassungsmittel (32) zum Erfassen mindestens einer Information über eine Eigenschaft eines Lebensmittels (46, 48) aufweist und
- **dass** die Steuereinheit (8, 106) dazu eingerichtet ist, eine Zubereitungsvorschrift in Abhängigkeit der mindestens einen durch die Erfassungsmittel (32) der Steuereinheit (8, 106) erfassten Information auszuwählen.

11. Verfahren zum Zubereiten von Lebensmitteln,
- bei dem mindestens eine Information über eine Eigenschaften eines Lebensmittels (24, 138) durch ein erstes Küchengerät (4, 102) erfasst wird,
- bei dem mindestens eine Zubereitungsvorschrift in Abhängigkeit der mindestens einen erfassten Information ausgewählt wird und
- bei dem ein Zubereitungsvorgang durch das erste Küchengerät (4, 102) entsprechend der mindestens einen ausgewählten Zubereitungsvorschrift ausgeführt wird.

12. Verfahren nach Anspruch 11,
bei dem eine Zubereitungsvorschriftsvariante einer Zubereitungsvorschrift in Abhängigkeit von der mindestens einen erfassten Information ausgewählt wird.

13. Verfahren nach Anspruch 11 oder 12,
bei dem eine neue Zubereitungsvorschriftsvariante auf Basis mindestens einer vorhandenen Zubereitungsvorschriftsvariante und in Abhängigkeit von der mindestens einen erfassten Information bestimmt wird.

14. Verfahren nach einem der Ansprüche 11 bis 13,
bei dem die neue Zubereitungsvorschriftsvariante durch Skalieren mindestens einer durch die ausgewählte Zubereitungsvorschrift vorgegebenen Angabe über eine Zutatenmenge bestimmt wird.

15. Verfahren nach einem der Ansprüche 11 bis 14,
bei dem mindestens eine Zubereitungsvorschrift in Abhängigkeit einer Nutzereingabe ausgewählt wird.

16. Verfahren nach einem der Ansprüche 11 bis 15,
bei dem mindestens eine Zubereitungsvorschrift aus einer externen Datenbank (130) ausgewählt wird.

17. Verfahren nach einem der Ansprüche 11 bis 16,
bei dem mindestens eine Information über eine Eigenschaft eines Lebensmittels (46, 48) durch die Steuereinheit (8, 106) erfasst wird und
- bei dem eine Zubereitungsvorschrift in Abhängigkeit der mindestens einen durch die Steuereinheit (8, 106) erfassten Information ausgewählt wird.

18. Verfahren nach einem der Ansprüche11 bis 17,
bei dem mindestens ein Zubereitungsvorgang entsprechend der mindestens einen ausgewählten Zubereitungsvorschrift durch das erste Küchengerät (4, 102) durchgeführt wird.

19. Verfahren nach einem der Ansprüche 11 bis 18,
bei dem die mindestens eine ausgewählte Zubereitungsvorschrift durch ein weiteres Küchengerät (6, 104) angezeigt wird
